# EUROPEAN PATENT APPLICATION

(11) **EP 1 156 247 A2**
(43) Date of publication of application: **21.11.2001**
(21) Application number: 01650058.9
(22) Date of filing: 17.05.2001
(51) Int. Cl.: F16K 31/08

(54) **A valve**

(30) Priority: 17.05.2000 IE 000381
(71) Applicant: OGLESBY & BUTLER, RESEARCH & DEVELOPMENT LIMITED, Carlow (IE)
(72) Inventor: Oglesby, Alfred Peter, Carlow (IE); Oglesby, John Paul, Carlow (IE); Griffin, Michael John, Carlow (IE)
(74) Representative: Gorman, Francis Fergus

(57) **Abstract**

A solenoid actuated magnetically latched valve comprises a main housing (2) formed by an inner sleeve (5) and an outer sleeve (38) extending between respective end caps (7, 8). The inner sleeve (5) defines a valving chamber (10) into which fluid is delivered through a fluid inlet (17) in the end cap (7). A fluid outlet (18) in the end cap (8) delivers fluid from the valving chamber (10). An armature (11) terminates in a valving member (21) which is co-operable with a valve seat (22) in the end cap (8), and is axially slideable within the valving chamber (10) between an open position with the valving member (21) disengaged from the valve seat (22), and a closed position with the valving member (21) engaging the valve seat (22). A pair of permanent magnets (45) generate magnetic flux which flows through the outer sleeve (38), the end caps (7, 8) and the armature (11) for alternately magnetically latching the armature (11) in the open position and the closed position. A pair of solenoid coils (50, 51) are located between the inner sleeve (5) and the outer sleeve (38) for shuttling the armature (11) between the respective open and closed position. A fluid accommodating bore (28) extends into the armature (11) and communicates with the fluid inlet (17) for accommodating fluid through the armature (11) to communicating ports (29) in the armature (11). The fluid is delivered through the communicating ports (29) into the valving chamber (10), and in turn through the fluid outlet (18) when the armature (11) is in the open position.

## Description

The present invention relates to a valve, and in particular, to a magnetically latched solenoid actuated flow control valve.

Such magnetically latched solenoid actuated flow control valves are known, and typically, are employed in controlling fluid flow, for example, the flow of liquids and gases, and in particular for isolating an appliance from a source of fluid. However, in general, such valves tend to be rather large, cumbersome and unwieldy. Additionally, many constructions of such valves are unsuitable for controlling the supply of hazardous liquids and gases.

British Patent Specification No. 2,273,548 of Bradley, et al discloses a solenoid actuated flow control valve for controlling fuel flow in a fuel line of a motor vehicle. The valve comprises a housing which defines a valving chamber. A fuel inlet and a fuel outlet located at axially opposite ends of the housing are provided to and from the valving chamber. A solenoid coil is located within the valving chamber, and an armature is axially slideable within the solenoid and carries a valving member for sealably engaging a valve seat adjacent the fuel outlet. A compression spring urges the armature and in turn the valving member into sealing engagement with the valve seat when the armature and valving member are in the closed position, and the armature is axially slideable from the closed position to an open position by magnetic flux generated by the solenoid coil. A permanent magnet latches the armature in the open position.

Fuel through the inlet is delivered into the valving chamber and through the valving chamber to the outlet. The fuel passes through the valving chamber between the armature and the housing through longitudinally extending slots formed in the armature. By virtue of the fact that the fuel in passing from the inlet to the outlet must pass through the slots extending longitudinally along the outer surface of the armature, the fuel meets considerable frictional resistance, and furthermore, the volume of fuel which can be accommodated through the valve is limited. Additionally, the transverse cross-sectional area of the valving chamber and the armature for a given flow rate of fuel is relatively large. Additionally, the construction of this valve requires a large number of components, and the assembly of the valve is a relatively complex, tedious and time consuming task.

U.S. Patent Specification No. 4,056,255 of Lace discloses a solenoid actuated flow control valve which comprises a valve housing which defines a valving chamber having a fluid inlet and a fluid outlet, which are axially aligned. A solenoid housing secured to the valve housing defines the valving chamber with the valve housing and extends from the valve housing perpendicularly relative to the axial alignment of the fluid inlet and the fluid outlet. A solenoid coil is located in the solenoid housing, and an armature extends from the solenoid coil and carries a valving member for co-operating with a valve seat in the valving chamber. A compression spring urges the armature and in turn the valving member into a closed position with the valving member sealably engaging the valve seat. Magnetic flux generated by the solenoid coil urges the armature and in turn the valving member from the closed to the open position against the action of the compression spring, and a permanent magnet latches the armature in the open position. A bore extending from the valve inlet to the valve seat is bent at 90° for directing the fluid into the valving chamber through the valve seat. The fluid is then directed through an angle of 180° in the valving chamber and through a further angle of 90° before exiting through the fluid outlet. This valve is relatively large and cumbersome, it comprises a large number of components, and thus its manufacture is relatively expensive, time consuming and tedious. Additionally, the fact that the fluid must be directed through so many different angles between the inlet and the outlet adds significant frictional resistance to the flow of fluid, and thus, the volume and flow rate of fluid through the valve is limited.

U.S. Patent Specification No. 3,814,376 of Reinicke also discloses a solenoid operated valve which is of a substantially similar type construction to the valve disclosed in U.S. Patent Specification No. 4,056,255. However, in the case of the valve of Reinicke the armature is magnetically latched in both the open and the closed positions. This valve of Reinicke suffers from many of the disadvantages of the valve of U.S. Patent Specification No. 4,056,255, and furthermore, is unsuitable for inline mounting in a pipeline.

U.S. Patent Specification No. 5,529,281 of Brudnicki, et al discloses a solenoid actuated flow control valve, which comprises a housing through which a hollow armature is axially slideable. A fluid inlet to the housing is provided at one axial end of the armature, and a fluid outlet is provided from the housing at the other axial end of the armature. The armature is slideable under the action of magnet flux generated by a pair of solenoid coils between a closed position with one end of the armature engaging a sealing disc at the fluid inlet end of the housing, and an open position spaced apart from the sealing disc, whereby fluid flows from the inlet through the armature to the outlet. The armature is magnetically latchable in both the open and the closed position. Fluid through the inlet is directed through an angle of 90° to flow radially outwardly through circumferentially arranged ports into an annular chamber before being redirected to the armature. By virtue of the arrangement for delivering fluid through the inlet, a valve of relatively large cross-sectional area is required. Additionally, by virtue of the fact that the fluid is turned through an angle of 90°, and then has to be redirected after entering the valve adds significant frictional resistance to the flow of fluid through the valve. Additionally, the valve requires a relatively large housing, and a particular disadvantage of the valve of Brudnicki is that the armature must be sealed relative to the housing, thus requiring dynamic sealing between the armature and the housing. Further, the valve of Brudnicki requires a large number of components and is relatively expensive and inefficient to manufacture and assemble.

PCT Specification No. WO 00/23740 of Oglesby, et al discloses a solenoid actuated magnetically latched flow control valve which comprises a housing formed by an inner sleeve and an outer sleeve, and a pair of end caps closing the inner sleeve to form with the inner sleeve an elongated valving chamber. A fluid inlet and a fluid outlet are arranged at respective axially opposite ends of the valving chamber. An armature is slideable axially within the valving chamber between an open position and a closed position, whereby one end of the armature co-operates with a valve seat adjacent the fluid outlet in the closed position. A pair of permanent magnets located centrally in the housing between the inner and outer sleeve forms a flux path through the outer sleeve, the end caps and the armature for magnetically latching the armature in the respective open and closed positions. Solenoid coils located between the inner and outer sleeves on respective opposite sides of the permanent magnets urge the armature between the open and the closed positions. The armature is solid and fluid flows from the inlet to the outlet through the valving chamber along an annular gap between the armature and the inner sleeve. A disadvantage of this valve is that by virtue of the fact that the fluid flow through the valving chamber is between the armature and the sleeve, the cross-sectional area for accommodating fluid is limited and thus, the flow rate of fluid through the valving chamber is limited. Additionally, frictional resistance to the flow of fluid through the valving chamber is relatively high.

There is therefore a need for a solenoid operated magnetically latched valve which overcomes the problems of prior art valves.

The present invention is directed towards providing such a valve.

According to the invention there is provided a valve comprising a main housing defining a longitudinally extending main central axis and defining an enclosed elongated fluid tight valving chamber extending parallel to the main central axis, a fluid inlet to the valving chamber located at one axial end thereof, and a fluid outlet from the valving chamber located at the other axial opposite end of the valving chamber communicating with the fluid inlet through the valving chamber, an elongated armature defining a secondary central axis and terminating in respective first and second axial opposite ends, the first end forming a valving member, the armature being located in the valving chamber with the secondary central axis extending parallel to the main central axis and being axially slideable therein between a closed position with the valving member co-operating with a valve seat defined by one of the fluid inlet and the fluid outlet for inhibiting fluid flow through the valve, and an open position permitting fluid flow through the valve, a solenoid coil provided around the main housing for co-operating with the armature for shuttling the armature between the open position and the closed position, a magnet means for magnetically latching the armature in at least one of the open and closed positions, wherein an elongated fluid accommodating bore extends axially into the armature from the second end to a communicating means intermediate the first and second ends of the armature, the communicating means extending through the armature for communicating the fluid accommodating bore with the outer surface of the armature, so that fluid flowing through the valving chamber flows for part of the length of the valving chamber within the fluid accommodating bore of the armature and for part of the length of the valving chamber externally along the armature, the second end of the armature co-operating with the other of the fluid inlet and the fluid outlet for communicating the fluid accommodating bore with the said other of the fluid inlet and the fluid outlet.

Preferably, the communicating means comprises at least one communicating port in the armature extending between the fluid accommodating bore and the outer surface of the armature. Advantageously, each communicating port extends radially through the armature from the fluid accommodating bore to the outer surface of the armature. Ideally, two communicating bores are provided at 180° intervals around the armature.

In one embodiment of the invention a guide means is provided on the armature intermediate the communicating means and the second end of the armature for co-operating with the main housing for guiding the armature between the open and closed positions. Preferably, the guide means is defined by an outer surface of the armature.

In another embodiment of the invention a portion of the armature between the communicating means and the first end defines with the main housing a fluid passageway through the valving chamber for accommodating fluid between the communicating means and the one of the fluid inlet and the fluid outlet which defines the valve seat.

Preferably, the fluid inlet and the fluid outlet are axially disposed. Advantageously, the fluid inlet and the fluid outlet are axially aligned with each other. Ideally, the fluid inlet and the fluid outlet are axially aligned with the armature.

In one embodiment of the invention the armature is magnetically latched in the open position.

In another embodiment of the invention the armature is magnetically latched in the closed position.

In a further embodiment of the invention the armature is magnetically latched in both the open and the closed positions.

Alternatively, the armature is latched by a spring in the other of the open and closed positions.

In one embodiment of the invention the first end of the armature co-operates with the main housing adjacent the one of the fluid inlet and the fluid outlet which defines the valve seat for forming a flux path for magnetic flux from the magnet means through the armature and the main housing for magnetically latching the armature in the closed position. Preferably, the first end of the armature extends into the one of the fluid inlet and the fluid outlet which defines the valve seat in the closed position for forming the flux path with the main housing. Advantageously, the first end of the armature terminates in a circumferentially extending surface which co-operates with a corresponding surface of the valve seat for forming the flux path.

In another embodiment of the invention the second end of the armature co-operates with the main housing adjacent the other of the fluid inlet and the fluid outlet for forming a flux path for the magnetic flux from the magnet means through the armature and the main housing for magnetically latching the armature in the open position. Preferably, the second end of the armature extends into the other of the fluid inlet and the fluid outlet in the open position for forming the flux path with the main housing. Advantageously, the second end of the armature terminates in a circumferentially extending surface for co-operating with a corresponding surface defined by the other of the fluid inlet and the fluid outlet for forming the flux path with the main housing.

In one embodiment of the invention the magnet means comprises a permanent magnet mounted in the main housing and co-operating with the main housing for forming the flux path with the armature. Advantageously, a pair of permanent magnets are located at diametrically opposite sides of the main housing relative to the main central axis thereof. Preferably, each permanent magnet is radially magnetised relative to the main central axis of the main housing. Advantageously, each permanent magnet is magnetised with similar poles directed towards the main central axis.

In one embodiment of the invention the magnet means is located intermediate the axial opposite ends of the main housing, and the solenoid coil is provided as a pair of solenoid coils on axially opposite sides of the magnet means.

In another embodiment of the invention at least one of the solenoid coils co-operates with the magnetic flux of the magnet means for urging the armature from the closed position to the open position, and at least the other of the solenoid coils co-operates with the magnetic flux of the magnet means for urging the armature from the open position to the closed position.

Preferably, the strength of the magnet means is such that a pulse signal in at least one of the solenoid coils is sufficient for urging the armature from one of the open to the closed positions.

In one embodiment of the invention the armature co-operates with the magnet means for forming the flux path between the magnet means and the armature. Advantageously, the flux path between the magnet means and the armature is formed through the guide means.

In a further embodiment of the invention the main housing comprises an inner sleeve extending between a pair of end caps, the inner sleeve and the end caps defining the valving chamber. Preferably, the fluid inlet is provided in one of the end caps and the fluid outlet is provided in the other of the end caps. Advantageously, the inner sleeve is of a non-magnetic material, or of a relatively weak magnetic material such that a magnetic flux path of any significant strength could not be established in the inner sleeve.

In another embodiment of the invention the respective end caps co-operate with the armature for forming the flux paths.

In one embodiment of the invention the main housing comprises an outer sleeve extending between the end caps and defining with the inner sleeve an annular chamber. Preferably, the magnet means is located in the annular chamber. Advantageously, each solenoid coil is located in the annular chamber. Ideally, the outer sleeve forms with the end caps the flux paths through the armature.

In one embodiment of the invention the inner sleeve sealably engages the end caps for forming the fluid tight valving chamber.

In another embodiment of the invention the end caps are identical to each other.

In a further embodiment of the invention the end caps are adapted for receiving respective pipe couplings for coupling the valve in a pipeline. Preferably, the respective end caps are adapted for receiving an instantor pipe coupling.

In one embodiment of the invention a cushioning means is provided adjacent the one of the fluid inlet and the fluid outlet which defines the valve seat for cushioning the armature as it is urged into the closed position. Preferably, respective cushioning means are provided adjacent the respective fluid inlet and the fluid outlet for cushioning the armature as it is urged into engagement with the respective fluid inlet and the fluid outlet.

In one embodiment of the invention a first sealing means is provided in the one of the fluid inlet and the fluid outlet which defines the valve seat for sealably engaging the valving member when the armature is in the closed position. Preferably, a second sealing means is provided in the other of the fluid inlet and the fluid outlet for co-operating with the second end of the armature when the armature is in the open position for accommodating fluid between the said other of the fluid inlet and the fluid outlet and the fluid accommodating bore of the armature.

In one embodiment of the invention the valve seat is defined by the fluid outlet.

In one embodiment of the invention an outer protective shell extends around the main housing.

In another embodiment of the invention the valve is adapted for fitting in a liquid supply line.

In a further embodiment of the invention the valve is adapted for fitting in a water supply line.

In a still further embodiment of the invention the valve is adapted for fitting in a central heating supply line.

In a still further embodiment of the invention the valve is responsive to a signal received from a thermostat for controlling the flow of water in the central heating system.

Further the invention provides a fluid supply pipe comprising a valve according to the invention connected therein.

The valve according to the invention has many advantages. In particular, the invention provides a valve of relatively small size with a relatively large fluid volumetric capacity and a relatively high flow rate with relative low fluid frictional resistance. Additionally, the valve according to the invention is suitable for use with hazardous fluids, such as, for example, combustible gases or liquids. Additionally, the valve is particularly suited for fitting in line in a pipeline in locations where available space is at a premium. The valve according to the invention is of relatively simple construction, and can be provided as a relatively low cost efficient valve.

By providing the fluid accommodating bore through the armature between the second end and the communicating means permits the guide means for guiding the armature as it shuttles between the open and closed positions to be located on the armature between the second end and the communicating means. This, thus, permits the cross-sectional area of the armature from the communicating means to the first end to be significantly reduced for accommodating fluid between the armature and the main housing. Accordingly, the fluid accommodating bore can be of cross-sectional area to provide for maximum fluid flow through the valve with minimum frictional resistance, and additionally, because the cross-sectional area of the armature between the communicating means and the first end can be reduced, the cross-sectional area between the armature and the main housing for accommodating fluid between the communicating means and the first end of the armature can be matched to the cross-sectional area of the fluid accommodating bore for similarly providing for the maximisation of the flow rate with minimum resistance to the fluid between the communicating means and the first end of the armature. Accordingly, for a given flow rate the cross-sectional area of the valving chamber of the valve according to the invention can be significantly less than required for valves known heretofore, and thus, the overall cross-sectional area, and thus the size of the main housing of the valve according to the invention can be significantly reduced over and above valves known heretofore for a given flow rate.

Furthermore, by virtue of the fact that the guide means can be provided by the central portion of the armature intermediate the second end and the communicating means, and the diameter of the central portion can be such as to form a sliding fit with the main housing, the magnet means can be arranged relative to the armature so that the radial spacing between the magnet means and the armature is minimised for maximising the magnetic flux flowing between the armature and the magnetic means, and in particular, for maximising the magnetic flux flowing between the solenoid coil and the armature, for in turn minimising the power required by the solenoid coil for shuttling the armature between the open and the closed positions.

By virtue of the fact that a fluid accommodating bore extends longitudinally through the armature, the fluid can pass directly into the fluid accommodating bore from the fluid inlet when the second end of the armature is located adjacent the fluid inlet unimpeded, thereby minimising frictional resistance to the fluid. On the other hand, if the second end of the armature is located adjacent the fluid outlet, the fluid can pass directly unimpeded from the fluid accommodating bore through the fluid outlet, similarly minimising frictional resistance to the fluid. Additionally, this leads to a relatively simple and compact construction of valve, in that the transverse cross-sectional area of the valving chamber can be minimised.

By providing the fluid inlet and the fluid outlet at respective axially opposite ends of the valving chamber and axially aligning the fluid inlet and the fluid outlet with the valving chamber and the armature an axial inline valve is provided which can be located inline in pipeline without altering the course of the pipeline. Indeed, the fact that the fluid accommodating bore extends through the armature further facilitates in providing the fluid inlet and the fluid outlet in direct axial alignment with each other.

By providing the valving chamber as a fluid tight valving chamber and by shuttling the armature between the open and the closed position and by latching the armature in at least one of the open and closed positions by a magnetic flux field, the armature can be shuttled between the open and closed positions without the need for any direct mechanical linkage to the armature. Additionally, by virtue of the fact that the first end of the armature forms a valving member for co-operating with a valve seat in one of the fluid inlet and the fluid outlet for inhibiting the flow of fluid through the valve, the valving member is operable within the valving chamber without the need for any direct mechanical linkage, thereby permitting the valving chamber to be formed as a fluid tight chamber. Furthermore, the fact that the armature and in turn the valving member is operable between the open and the closed position without the need for any direct mechanical linkage to the armature or the valving member avoids the need for providing mechanical seals. The only seals which are required are static seals which are required for sealing an inlet pipe and an outlet pipe to and from the main housing. Indeed, the valve lends itself ideally to permit the main housing which forms the valving chamber to be formed as a single one-piece integral unit. Indeed where the valving chamber is formed by a housing of more than one piece, for example, by a sleeve and a pair of end caps, the sleeve and end caps can be sealed by static seals, and still there is no requirement for dynamic sealing.

Additionally, the valve is of a particularly simple construction. Where the main housing is formed in four pieces, namely, an inner sleeve and an outer sleeve with respective opposite end caps, the respective opposite end caps can be identical. Thus, effectively each valve according to the invention can be provided with an inner and an outer sleeve, two end caps, both of which are identical, an armature and a pair of solenoid coils wound on respective formers, and the solenoid coils and formers can also be identical, as well as a pair of permanent magnets, which can also be identical to each other. Thus, the valve according to the invention is of relatively simple construction, and the inventory required to produced the valve is minimised. By virtue of the limited number of components which are required for the valve, manufacture and assembly of the valve is also simplified.

Furthermore, by virtue of the fact that the magnet means alternately latches the armature in the respective open and closed positions, power to the solenoid coil or coils is only required to shuttle the armature between the respective open and closed positions. Thus, all that is required is a relatively short positive or negative going pulse to the respective solenoid coils, depending on whether the armature is to be shuttled from the open to the closed position, or vice versa. Thus, the power requirement of the valve according to the invention is minimised.

The invention will be more clearly understood from the following description of some preferred embodiments thereof which are given by way of example only with reference to the accompany drawings, in which:
Fig. 1 is a perspective view of a valve according to the invention,
Fig. 2 is a transverse cross-sectional side elevational view of the valve of Fig. 1, in one state,
Fig. 3 is a transverse cross-sectional side elevational view of the valve of Fig. 1 in another state,
Fig. 4 is a perspective view of a portion of the valve of Fig. 1,
Fig. 5 is a side elevational view of the portion of the valve of Fig. 4,
Fig. 6 is a transverse cross-sectional side elevational view of the portion of the valve of Fig. 4,
Fig. 7 is an end view of the portion of Fig. 4,
Fig. 8 is a perspective view of another portion of the valve of Fig. 1,
Fig. 9 is a transverse cross-sectional end view of the valve of Fig. 1 on the line IX - IX of Fig. 2,
Fig. 10 is a view similar to Fig. 3 of a valve according to another embodiment of the invention, and
Fig. 11 is a view similar to Fig. 3 of a valve according to a further embodiment of the invention.

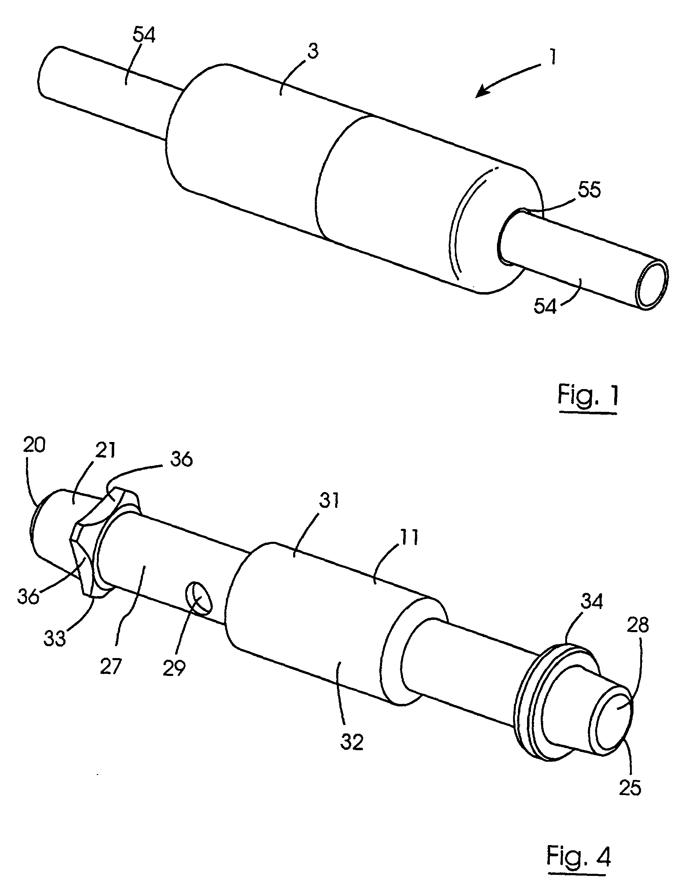

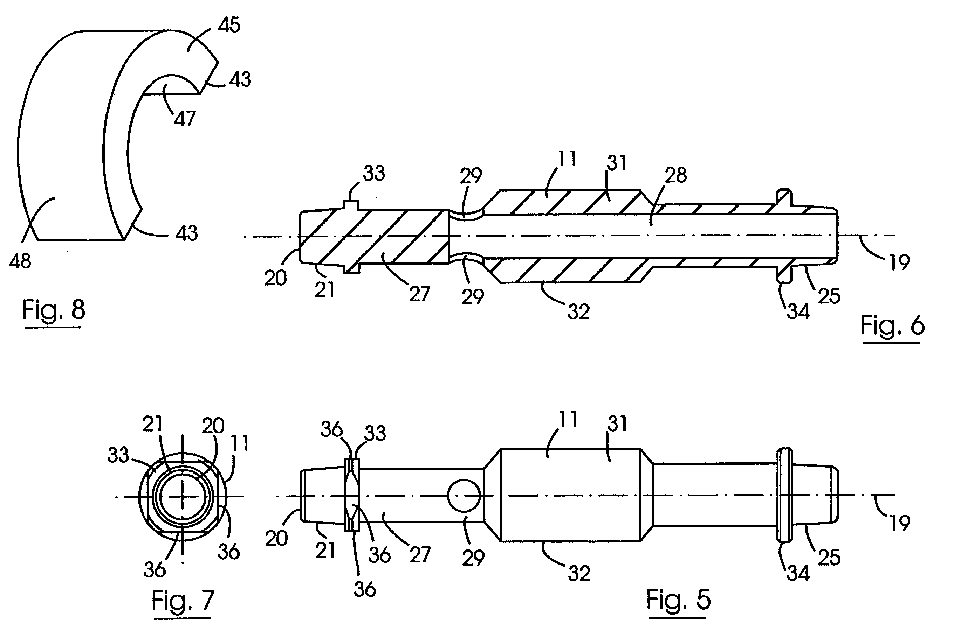

Referring to the drawings and initially to Figs. 1 to 9 there is illustrated a valve according to the invention which is a magnetically latched solenoid actuated flow control valve indicated generally by the reference numeral 1, and which is particularly suitable for controlling fluid flow, for example, for controlling the flow of water in a central heating system in response to a thermostat. The valve 1 comprises a main housing 2 which is encased in a two part outer protective shield 3 typically, of a plastics material. The outer shell 3 may be formed in two halves separated longitudinally intermediate their ends or in two halves separated axially along their length. Any suitable securing means for securing the two halves of the outer protective shell 3 may be provided.

The main housing 2 comprises an inner sleeve 5 of circular transverse cross-section which defines a main central axis 6. The inner sleeve 5 is of a non-magnetic material, for example, stainless steel or a plastics material. The inner sleeve 5 extends between a pair of end caps 7 and 8 and sealably engages the end caps 7 and 8 for forming a fluid tight valving chamber 10 within which an elongated armature 11 is slideable as will be described below. O-ring seals 14 in annular grooves 15 located within the end caps 7 and 8 sealably engage the inner sleeve 5 in the end caps 7 and 8, although by making the end caps 7 and 8 an interference fit on the inner sleeve 5, the O-ring seals 14 could be dispensed with. The end caps 7 and 8 are of a magnetic material suitable for forming a flux path for conducting magnetic flux as will be described below. An axially extending fluid inlet 17 in the end cap 7 is axially aligned with the main central axis 6, and accommodates fluid into the valving chamber 10. An axial fluid outlet 18 which is axially aligned with the main central axis 6 is located in the end cap 8 for accommodating fluid from the valving chamber 10.

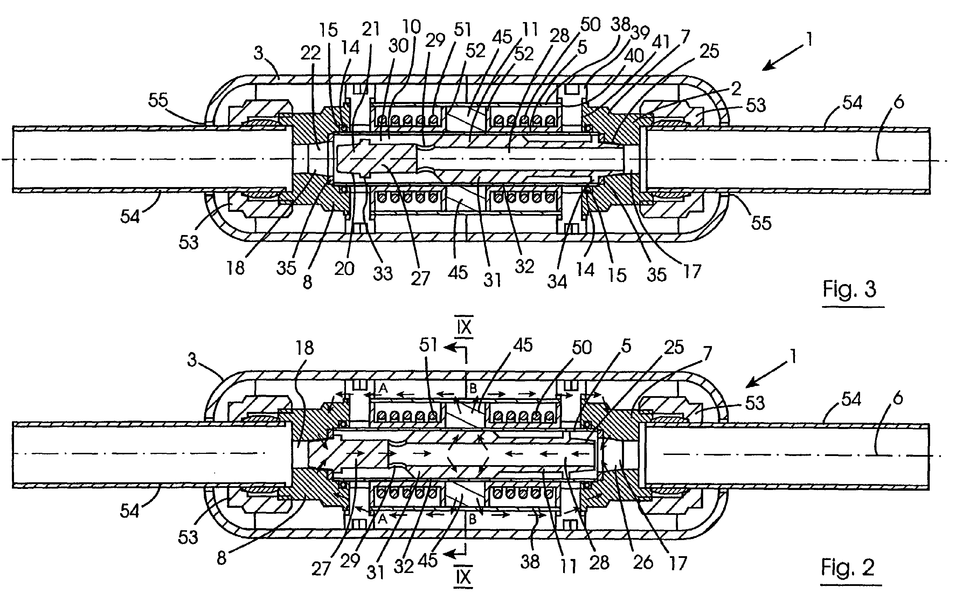

The armature 11 is of circular transverse cross-section and defines a secondary central axis 19 which coincides with the main central axis 6 of the main housing 2. The armature 11 is of a magnetic material suitable for forming a flux path for conducting magnetic flux, and terminates in a first tapered end 20 which forms a valving member 21 for co-operating with a tapered valve seat 22 in the fluid outlet 18 for closing the outlet 18 when the armature 11 is in a closed position illustrated in Fig. 2. The other end of the armature 11 terminates in a second tapered end 25 for co-operating with a correspondingly tapered seat 26 in the fluid inlet 17 when the armature 11 is in an open position illustrated in Fig. 3 with the valving member 21 disengaged from the valve seat 22 of the fluid outlet 18. A pair of solenoid coils 50 and 51 wound on formers 52 of non-magnetic material extending around the inner sleeve 5 generate magnetic flux fields for shuttling the armature 11 between the open and closed positions as will be described below. A magnet means comprising a pair of permanent magnets 45 located on diametrically opposite sides of the inner sleeve 5 latch the armature 11 in the respective open and closed positions as will also be described below.

An elongated fluid accommodating bore 28 communicating with the fluid inlet 17 extends axially through the armature 11 from the second end 25 to a communicating means, namely, a pair of communicating ports 29 located intermediate the first and second ends 20 and 25 of the armature 11. The communicating ports 29 communicate the fluid accommodating bore 28 with the outer surface of the armature 11. The fluid accommodating bore 28 and the communicating ports 29 are arranged so that when the armature 11 is in the open position the fluid accommodating bore 28 communicates with the fluid inlet 17 for accommodating fluid from the fluid inlet 17 through the communicating ports 29 and into the valving chamber 10. The diameter of a portion 27 of the armature 11 between the communicating ports 29 and the first tapered end 20 is such as to form with the inner sleeve 5 and the fluid outlet 18 when the armature 11 is in the open position an annular passageway 30 for accommodating fluid from the communicating ports 29 through the fluid outlet 18.

A central portion 31 of the armature 11 intermediate the second end 25 and the communicating ports 29 and adjacent the permanent magnets 45 is of diameter such that an outer surface 32 defined by the portion 31 forms a guide means which co-operates with, and slideably engages the inner sleeve 5 for locating the armature 11 in the valving chamber 10, and for guiding the armature 11 between the open and the closed positions.

Flanges 33 and 34 are located at the respective opposite ends of the armature 11 adjacent the first and second tapered ends 20 and 25, respectively, for engaging cushioning means, namely, circular washers 35 of resilient material located in the respective end caps 7 and 8 for cushioning engagement of the armature 11 with the respective end caps 7 and 8 when the armature 11 is being urged into the respective closed and open positions, and thereby eliminating noise as the armature 11 is shuttling into the respective open and closed positions. Flats 36 are provided on the flange 33 for accommodating fluid between the flange 33 and the inner sleeve 5. The flange 34 is also in slideable engagement with the inner sleeve 5 for axially locating and guiding the armature 11 in the valving chamber 10.

An outer sleeve 38 of magnetic material and of circular transverse cross-section extends between the end caps 7 and 8, and defines with the inner sleeve 5 and the end caps 7 and 8 an annular chamber 36. The outer sleeve 38 is secured to the end caps 7 and 8 by screws 39 through holes 40 into threaded bores 41 in the end caps 7 and 8, respectively. The securing of the outer sleeve 38 to the end caps 7 and 8 retains the end caps 7 and 8 in tight sealable engagement with the inner sleeve 5.

The permanent magnets 45 which are of arcuate shape and substantially semicircular are located on respective diametrically opposite sides of the inner sleeve 5 in the annular chamber 46. Each permanent magnet 45 extends substantially half way around the inner sleeve 5 with a small air gap 44 formed between the respective adjacent ends 43 of the magnets 45. The permanent magnets 45 are located half way between the end caps 7 and 8, and are magnetised in a radial direction having respective south poles adjacent an inner arcuate surface 47 and respective north poles adjacent an outer arcuate surface 48. The permanent magnets 45 form magnetic flux paths in the directions of the arrows A and B through the outer sleeve 38, the respective end caps 7 and 8 and the armature 11 for alternately magnetically latching the armature 11 in the open and closed positions. When the armature 11 is in the closed position the magnetic flux in the direction of the arrows A flowing through the outer shell 38 the end cap 8 and the armature 11 is greater than the magnetic flux flowing in the direction of the arrows B through the outer sleeve 38 the end cap 7 and the armature 11 and thereby the armature 11 is latched in the closed position by the magnets 45. When the armature 11 is in the open position the magnetic flux flowing in the direction of the arrows B is greater than the magnetic flux flowing in the direction of the arrows A and thereby the armature 11 is latched in the open position.

The solenoid coils 50 and 51 wound on the corresponding formers 52 are located in the annular chamber 46 around the inner sleeve 5, and are located between the permanent magnets 45 and the end caps 7 and 8, respectively, for urging the armature 11 between the respective open and closed positions. Accordingly, when the armature 11 is in the closed position a positive going pulse passed through the solenoid coils 50 and 51 generates magnetic flux which act against the magnetic flux in the direction of the arrows A and act with the magnetic flux in the direction of the arrows B for urging the armature 11 from the closed to the open position. When the armature 11 is in the open position a negative going pulse through the solenoid coils 50 and 51 generates magnetic flux in the opposite directions for urging the armature 11 from the open to the closed position.

The taper on the first tapered end 20 of the armature 11 is such and is matched with the taper of the valve seat 22 of the fluid outlet 18 for sealably closing the fluid outlet 18 when the armature 11 is in the closed position for preventing fluid flow through the valve 1. Additionally, the flange 33 also engages the resilient washer 35 in the end cap 8 with a sealable type action which further acts to prevent fluid flow through the valve 1. The taper on the second tapered end 25 of the armature 11 is such and corresponds with the tapered seat 26 in the fluid inlet 17 for forming a seal between the tapered end 25 and the tapered seat 26, although, as will be apparent to those skilled in the art a seal between the tapered end 25 and the tapered seat 26 is not essential. However, by virtue of the fact that the first and second tapered ends 20 and 25 co-operate with the tapered seats 22 and 26 for forming a seal, also ensures the formation of an adequate flux path between the armature 11 and the end caps 7 and 8 when the armature 11 is in the respective open and closed positions for magnetically latching the armature 11 in the respective open and closed positions.

Additionally, the fact that the central portion 31 of the armature 11 is of diameter to be in sliding engagement with the inner sleeve 5 minimises the radial spacing between the armature 11 and the permanent magnets 45. By minimising the radial spacing between the armature 11 and the permanent magnets 45 an adequate flux path is provided between the permanent magnets 45 and the armature 11. Additionally, the axial length of the central portion 31 is such that the radial spacing between the armature 11 and the permanent magnets 45 is minimised irrespective of whether the armature 11 is in the open or closed positions.

The end caps 7 and 8 are identical, and are adapted for receiving pipe couplings, in this embodiment of the invention instantor nuts 53 for securing pipes 54 of a pipeline to the valve 1. Openings 55 are formed in the outer protective shell 3 for accommodating the pipes 54 into the end caps 7 and 8.

Grommeted openings (not shown) are provided through the outer protective shell 3 and the outer sleeve 38 for accommodating cables into the solenoid coils 50 and 51.

In use, when the valve 1 is connected into a pipeline a positive going pulse to the solenoid coils 50 and 51 urges the armature 11 from the closed to the open position, while a negative going pulse in the solenoid coils 50 and 51 urges the armature 11 from the open to the closed position. Once in the respective open and closed positions, the permanent magnets 45 latch the armature 11 in the respective open and closed positions. When in the open position the passage of fluid through the pipeline flows through the fluid inlet 17, through the fluid accommodating bore 28 in the armature 11, through the communicating ports 29 and in turn through the fluid passageway 30 and then through the fluid outlet 18. When the armature 11 is in the closed position the passage of fluid through the valve 1 is inhibited by the engagement of the valving member 21 with the valve seat 22 in the fluid outlet 18.

Typically, when connected into a central heating system the valve 1 operates under the control of a temperature control circuit, which typically reads a temperature sensor located in a room or zone to which central heating water to a radiator or radiators is delivered, and on the temperature in the room or zone exceeding an upper set point a negative going pulse signal is sent to the solenoids 50 and 51 for urging the armature 11 from the open to the closed position, and vice versa when the temperature in the room or region reaches a lower set point.

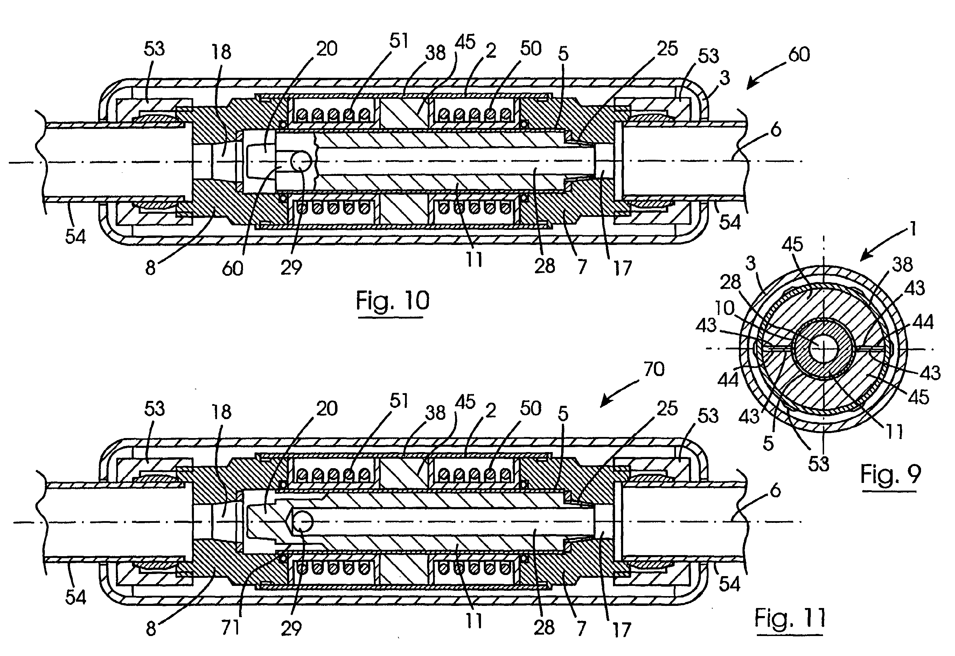

Referring now to Fig. 10 there is illustrated a valve according to another embodiment of the invention indicated generally by the reference numeral 60. The valve 60 is substantially similar to the valve 1 and similar components are identified by the same reference numeral. Indeed, the valve 60 is also suitable for controlling fluid flow, for example, for isolating the flow of water in a central heating system in response to a thermostat. The main difference between the valve 60 and the valve 1 is that the armature 11 is of constant circular transverse outer cross-section between the first tapered end 20 and the second tapered end 25. The outer diameter of the armature 11 is just less than the diameter of the valving chamber 10 formed by the inner sleeve 5 in order that the armature 11 is a sliding fit in the valving chamber 10. By virtue of the fact that the outer diameter of the armature 11 is just less than the diameter of the valving chamber 10, a pair of longitudinally extending communicating grooves 61 communicate the communicating ports 29 with the outlet 18. The communicating grooves 61 are formed in the outer surface of the armature 11 and extend from the communicating ports 29 to the first tapered end 20 for accommodating fluid from the communicating ports 29 into the valving chamber 10, and in turn to the fluid outlet 18. Otherwise, the valve 60 is similar to the valve 1.

The advantage of providing the armature 11 of diameter just less than that of the valving chamber 10 over its entire length between the first tapered end 20 and the second tapered end 25 is that it permits the armature to be provided with a relatively thick wall of magnetic material surrounding the fluid accommodating bore 28, thereby, providing a substantial flux path between the permanent magnets 45 and the respective end caps 7 and 8 through the armature 11. This may be advantageous in certain constructions of the valve. Furthermore, the armature 11 of the valve 60 forms a particularly good flux path through both end caps 7 and 8 when the armature 11 is in both the open and closed positions. As can be seen in Fig. 10 when the armature 11 is in the open position a slight overlap occurs between the portions of the armature 11 and the portion of the end cap 8 which are in sliding engagement with each other, thereby providing a good flux path through the armature 11 and the end cap 8 even when the armature 11 is in the open position. The armature 11 takes up a similar configuration with respect to the end cap 7 when the armature 11 is in the closed position. This facilitates shuttling of the armature 11 between the open and closed positions by the solenoid coils, and minimises the power required by the solenoid coils, and is advantageous in some constructions of the valve.

Referring now to Fig. 11 there is illustrated a valve according to another embodiment of the invention indicated generally by the reference numeral 70. The valve 70 is substantially similar to the valve 1 and similar components are identified by the same reference numerals. The valve 70 is also suitable for controlling the flow of fluids, and in particular, for isolating water of a central heating system in response to a thermostat. The main difference between the valve 70 and the valve 1 is in the construction of the armature 11. The armature 11 is substantially similar to the armature 11 of the valve 60, with the exception that the end of the armature 11 adjacent the first tapered end 20 is relieved at 71 by reducing the outer diameter of the armature 11 from a position just upstream of the communicating ports 29 and the first tapered end 20. Otherwise, the valve 70 is similar to the valves 1 and 60. The advantages of providing the armature 11 in the configuration of the valve 70 is similar to that achieved by the armature of the valve 60, in that it provides a substantial flux path for flux between the permanent magnet 45 and the respective end caps 7 and 8 through the armature 11. When the armature 11 is in the closed position a slight overlap occurs between the portions of the armature 11 and the end cap 7 which are in sliding engagement with each other. However, a corresponding overlap does not occur between the armature 11 and the end cap 8 when the armature 11 is in the open position. However, there is still a sufficient flux path between the armature 11 and the end cap 8 that when the armature 11 is in the open position, operating the solenoid coils appropriately urges the armature 11 into the closed position.

If desired a filter for filtering the fluid may be located in the fluid accommodating bore 28 through the armature 11 or in the fluid inlet. Additionally, or alternatively a magnetic filter for collecting magnetic particles may be placed on the inlet pipe adjacent the valve. Such a magnetic filter, typically would comprise a permanent magnet extending partly or completely around the inlet pipe, which would attract magnetic particulate matter to collect on the inner surface of the bore of the pipe. Such a permanent magnet would operate adequately irrespective of whether the material of the pipe were magnetic or non-magnetic.

It is also envisaged that instead of magnetically latching the armature in both the open and closed positions, it is envisaged that the armature may be latched in one of the open and closed positions by a spring, which may be a compression spring or a tension spring, but more typically would be a compression spring.

## Claims

1. A valve comprising a main housing (2) defining a longitudinally extending main central axis (6) and defining an enclosed elongated fluid tight valving chamber (10) extending parallel to the main central axis (6), a fluid inlet (17) to the valving chamber (10) located at one axial end thereof, and a fluid outlet (18) from the valving chamber (10) located at the other axial opposite end of the valving chamber (10) communicating with the fluid inlet (17) through the valving chamber (10), an elongated armature (11) defining a secondary central axis (19) and terminating in respective first and second axial opposite ends (20, 25), the first end (20) forming a valving member (21), the armature (11) being located in the valving chamber (10) with the secondary central axis (19) extending parallel to the main central axis (6) and being axially slideable therein between a closed position with the valving member (21) co-operating with a valve seat (22) defined by one of the fluid inlet (17) and the fluid outlet (18) for inhibiting fluid flow through the valve (1), and an open position permitting fluid flow through the valve (1), a solenoid coil (50, 51) provided around the main housing (5) for co-operating with the armature (11) for shuttling the armature (11) between the open position and the closed position, a magnet means (45) for magnetically latching the armature (11) in at least one of the open and closed positions, **characterised in that** an elongated fluid accommodating bore (28) extends axially into the armature (11) from the second end (25) to a communicating means (29) intermediate the first and second ends (20, 25) of the armature (11), the communicating means (29) extending through the armature (11) for communicating the fluid accommodating bore (28) with the outer surface of the armature (11), so that fluid flowing through the valving chamber (10) flows for part of the length of the valving chamber (10) within the fluid accommodating bore (28) of the armature (11) and for part of the length of the valving chamber (10) externally along the armature (11), the second end (25) of the armature (11) co-operating with the other of the fluid inlet (17) and the fluid outlet (18) for communicating the fluid accommodating bore (28) with the said other of the fluid inlet (17) and the fluid outlet (18).

2. A valve as claimed in Claim 1 **characterised in that** the communicating means (29) comprises at least one communicating port (29) in the armature (11) extending between the fluid accommodating bore (28) and the outer surface of the armature (11).

3. A valve as claimed in Claim 2 **characterised in that** each communicating port (29) extends radially through the armature (11) from the fluid accommodating bore (28) to the outer surface of the armature (11).

4. A valve as claimed in Claim 2 or 3 **characterised in that** two communicating bores (29) are provided at 180° intervals around the armature (11).

5. A valve as claimed in any preceding claim **characterised in that** a guide means (31, 32) is provided on the armature (11) intermediate the communicating means (29) and the second end (25) of the armature (11) for co-operating with the main housing (5) for guiding the armature (11) between the open and closed positions.

6. A valve as claimed in Claim 5 **characterised in that** the guide means (31, 32) is defined by an outer surface (32) of the armature (11).

7. A valve as claimed in any preceding claim **characterised in that** a portion (27) of the armature between the communicating means (29) and the first end (20) defines with the main housing (5) a fluid passageway (30) through the valving chamber (10) for accommodating fluid between the communicating means (29) and the one of the fluid inlet (17) and the fluid outlet (18) which defines the valve seat (22).

8. A valve as claimed in any preceding claim **characterised in that** the fluid inlet (17) and the fluid outlet (18) are axially disposed.

9. A valve as claimed in any preceding claim **characterised in that** the fluid inlet (17) and the fluid outlet (18) are axially aligned with each other.

10. A valve as claimed in any preceding claim **characterised in that** the fluid inlet (17) and the fluid outlet (18) are axially aligned with the armature (11).

11. A valve as claimed in any preceding claim **characterised in that** the armature (11) is magnetically latched in the open position.

12. A valve as claimed in any preceding claim **characterised in that** the armature (11) is magnetically latched in the closed position.

13. A valve as claimed in any preceding claim in which the armature (11) is magnetically latched in both the open and the closed positions.

14. A valve as claimed in any of Claims 1 to 12 **characterised in that** the armature (11) is latched by a spring in the other of the open and closed positions.

15. A valve as claimed in any preceding claim **characterised in that** the first end (20) of the armature (11) co-operates with the main housing (5) adjacent the one of the fluid inlet (17) and the fluid outlet (18) which defines the valve seat (22) for forming a flux path for magnetic flux from the magnet means (45) through the armature (11) and the main housing (2) for magnetically latching the armature (11) in the closed position.

16. A valve as claimed in Claim 15 **characterised in that** the first end (20) of the armature extends into the one of the fluid inlet (17) and the fluid outlet (18) which defines the valve seat (22) in the closed position for forming the flux path with the main housing (2).

17. A valve as claimed in Claim 15 or 16 **characterised in that** the first end (20) of the armature (11) terminates in a circumferentially extending surface which co-operates with a corresponding surface of the valve seat (22) for forming the flux path.

18. A valve as claimed in any preceding claim **characterised in that** the second end (25) of the armature (11) co-operates with the main housing (2) adjacent the other of the fluid inlet (17) and the fluid outlet (18) for forming a flux path for the magnetic flux from the magnet means (45) through the armature (11) and the main housing (2) for magnetically latching the armature (11) in the open position.

19. A valve as claimed in Claim 18 **characterised in that** the second end (25) of the armature (11) extends into the other of the fluid inlet (17) and the fluid outlet (18) in the open position for forming the flux path with the main housing (2).

20. A valve as claimed in Claim 18 or 19 **characterised in that** the second end (25) of the armature (11) terminates in a circumferentially extending surface for co-operating with a corresponding surface (26) defined by the other of the fluid inlet (17) and the fluid outlet (18) for forming the flux path with the main housing (2).

21. A valve as claimed in any preceding claim **characterised in that** the magnet means (45) comprises a permanent magnet (45) mounted in the main housing (2) and co-operating with the main housing (2) for forming the flux path with the armature (11).

22. A valve as claimed in Claim 21 **characterised in that** a pair of permanent magnets (45) are located at diametrically opposite sides of the main housing (2) relative to the main central axis (6) thereof.

23. A valve as claimed in Claim 21 or 22 **characterised in that** each permanent magnet (45) is radially magnetised relative to the main central axis (6) of the main housing (2).

24. A valve as claimed in Claim 23 **characterised in that** each permanent magnet (45) is magnetised with similar poles directed towards the main central axis (6).

25. A valve as claimed in any of preceding claim **characterised in that** the magnet means (45) is located intermediate the axial opposite ends of the main housing (2), and the solenoid coil (50, 51) is provided as a pair of solenoid coils (50, 51) on axially opposite sides of the magnet means (45).

26. A valve as claimed in Claim 25 **characterised in that** at least one of the solenoid coils (50, 51) co-operates with the magnetic flux of the magnet means (45) for urging the armature (11) from the closed position to the open position, and at least the other of the solenoid coils (50, 51) co-operates with the magnetic flux of the magnet means (45) for urging the armature (11) from the open position to the closed position.

27. A valve as claimed in Claim 25 or 26 **characterised in that** the strength of the magnet means (45) is such that a pulse signal in at least one of the solenoid coils (50, 51) is sufficient for urging the armature (11) from one of the open to the closed positions.

28. A valve as claimed in any preceding claim **characterised in that** the armature (11) co-operates with the magnet means (45) for forming the flux path between the magnet means (45) and the armature (11).

29. A valve as claimed in Claim 28 **characterised in that** the flux path between the magnet means (45) and the armature (11) is formed through the guide means (31, 32).

30. A valve as claimed in any preceding claim **characterised in that** the main housing (2) comprises an inner sleeve (5) extending between a pair of end caps (7, 8), the inner sleeve (5) and the end caps (7, 8) defining the valving chamber (10).

31. A valve as claimed in Claim 30 **characterised in that** the fluid inlet (17) is provided in one of the end caps (7) and the fluid outlet (18) is provided in the other of the end caps (8).

32. A valve as claimed in Claim 30 or 31 **characterised in that** the inner sleeve (5) is of a non-magnetic material.

33. A valve as claimed in any of Claims 30 to 32 **characterised in that** the respective end caps (7, 8) co-operate with the armature (11) for forming the flux paths.

34. A valve as claimed in any of Claims 30 to 33 **characterised in that** the main housing (2) comprises an outer sleeve (38) extending between the end caps (7, 8) and defining with the inner sleeve (5) an annular chamber (46).

35. A valve as claimed in Claim 34 **characterised in that** the magnet means (45) is located in the annular chamber (46).

36. A valve as claimed in Claim 34 or 35 **characterised in that** each solenoid coil (50, 51) is located in the annular chamber (46).

37. A valve as claimed in any of Claims 34 to 36 **characterised in that** the outer sleeve (38) forms with the end caps (7, 8) the flux paths through the armature (11).

38. A valve as claimed in any of Claims 30 to 37 **characterised in that** the inner sleeve (5) sealably engages the end caps (7, 8) for forming the fluid tight valving chamber (10).

39. A valve as claimed in any of Claims 30 to 38 **characterised in that** the end caps (7, 8) are identical to each other.

40. A valve as claimed in any of Claims 30 to 39 **characterised in that** the end caps (7, 8) are adapted for receiving respective pipe couplings (53) for coupling the valve (1) in a pipeline (54).

41. A valve as claimed in Claim 40 **characterised in that** the respective end caps (7, 8) are adapted for receiving an instantor pipe coupling (53).

42. A valve as claimed in any preceding claim **characterised in that** a cushioning means (35) is provided adjacent the one of the fluid inlet (17) and the fluid outlet (18) which defines the valve seat (22) for cushioning the armature (11) as it is urged into the closed position.

43. A valve as claimed in Claim 42 **characterised in that** respective cushioning means (35) are provided adjacent the respective fluid inlet (17) and the fluid outlet (18) for cushioning the armature (11) as it is urged into engagement with the respective fluid inlet (17) and the fluid outlet (18).

44. A valve as claimed in any preceding claim **characterised in that** a first sealing means (22) is provided in the one of the fluid inlet (17) and the fluid outlet (18) which defines the valve seat (22) for sealably engaging the valving member (21) when the armature (11) is in the closed position.

45. A valve as claimed in any preceding claim **characterised in that** a second sealing means (26) is provided in the other of the fluid inlet (17) and the fluid outlet (18) for co-operating with the second end (25) of the armature (11) when the armature (11) is in the open position for accommodating fluid between the said other of the fluid inlet (17) and the fluid outlet (18) and the fluid accommodating bore (28) of the armature (11).

46. A valve as claimed in any preceding claim **characterised in that** the valve seat (22) is defined by the fluid outlet (18).

47. A valve as claimed in any preceding claim **characterised in that** an outer protective shell (3) extends around the main housing (2).

48. A valve as claimed in any preceding claim **characterised in that** the valve (1) is adapted for fitting in a liquid supply line.

49. A valve as claimed in any preceding claim **characterised in that** the valve (1) is adapted for fitting in a water supply line.

50. A valve as claimed in any preceding claim **characterised in that** the valve (1) is adapted for fitting in a central heating supply line.

51. A valve as claimed in any preceding claim **characterised in that** the valve (1) is responsive to a signal received from a thermostat for controlling the flow of water in the central heating system.

52. A fluid supply pipe comprising the valve (1) as claimed in any preceding claim connected therein.
